# EUROPÄISCHE PATENTSCHRIFT

(11) **EP 0 415 009 B1**
(45) Veröffentlichungstag und Bekanntmachung des Hinweises auf die Patenterteilung: **25.08.1993**
(21) Anmeldenummer: 90110844.9
(22) Anmeldetag: 08.06.1990
(51) Int. Cl.: B61H 5/00, B61H 13/00, B60T 17/08

(54) **Bremseinrichtung, insbesondere für Schienenfahrzeuge**
Brake device, especially for railway vehicles
Dispositif de freinage, notamment pour véhicules ferroviaires

(30) Priorität: 03.08.1989 DE 3925700
(43) Veröffentlichungstag der Anmeldung: 06.03.1991
(73) Patentinhaber: MANNESMANN REXROTH PNEUMATIK GMBH, 30453 Hannover (DE)
(72) Erfinder: Lehnert, Erhard, D-3162 Uetze/Dollbergen (DE); Windel, Manfred, D-3000 Hannover (DE)
(74) Vertreter: Flaig, Siegfried

(56) Entgegenhaltungen:
- DE-A- 2 026 545
- DE-B- 2 254 090
- US-A- 3 924 902

## Beschreibung

Die Erfindung betrifft eine Bremseinrichtung, insbesondere für Schienenfahrzeuge, gemäß dem Oberbegriff des Patentanspruchs 1.

Eine derartige Bremseinrichtung ist aus der DE-PS 20 26 545 bekannt.

Der Federspeicherkolben, die Speicherfeder, die Abstützung für die Speicherfeder und das mit einem Bremsgestänge zusammenwirkende Kraftübertragungsglied sind bei der bekannten Bremseinrichtung in Reihe hintereinander liegend angeordnet.

Diese Bremseinrichtung hat den Nachteil eines relativ großes Raumbedarfes für das Kraftübertragungsglied, wodurch die gesamte Bremseinrichtung relativ groß baut.

Der Erfindung liegt die Aufgabe zugrunde, eine Bremseinrichtung der eingangs erwähnten Art zu schaffen, die gegenüber der bekannten Bremseinrichtung einen kleineren Aufbau aufweist.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, für die Unterbringung des Kraftübertragungsgliedes keinen zusätzlichen Raum zu benötigen, wodurch eine geringere Baugröße der Bremseinrichtung erzielt wird. Die Einsparung eines zusätzlichen Raumes zur Unterbringung des Kraftübertragungsgliedes wird dadurch erreicht, daß die Speicherfeder und das die Lagerstelle bzw. die Lagerstellen für wenigstens einen Hebel des Bremsgestänges aufweisende Teil des Kraftübertragungsgliedes parallel zueinander angeordnet sind. Das heißt, die Speicherfeder ist bei Vorhandensein von zwei Hebeln zwischen den beiden Hebeln gelegen, wobei die Lagerstellen für die beiden Hebel quer zur Längsachse der Speicherfeder angeordnet sind.

Das Kraftübertragungsglied ist gemäß einer Weiterbildung der Erfindung mit einem die Speicherfeder auf einem Teil ihrer axialen Erstreckung umgebenden rohrförmigen Körper verbunden, an dessen äußerer Mantelf läche die Lagerstelle oder auch die Lagerstellen für einen Hebel oder auch für zwei Hebel des Bremsgestänges angeordnet ist bzw. angeordnet sind.

Gemäß einer vorteilhaften Ausgestaltung der Erfindung ist der rohrförmige Körper mit einem koaxial zu diesem angeordneten weiteren rohrförmigen Körper über einen diese beiden Teile verbindenden ringscheibenförmigen Körper verbunden. Der weitere rohrförmige Körper ist innerhalb des die Lagerstelle bzw. die Lagerstellen für den oder für die Hebel des Bremsgestänges aufweisenden rohrförmigen Körpers gelegen und erstreckt sich in den von der Speicherfeder begrenzten Raum hinein.
Der weitere rohrförmige Körper ist ein Teil des Kraftübertragungsgliedes, der mit dem Federspeicherkolben oder einem Teil des Federspeicherkolbens direkt oder indirekt über ein als Druckstück ausgebildetes Teil zusammenwirkt.

An seinem dem Federspeicherkolben zugewandten Endbereich weist der weitere rohrförmige Körper einen Anschlag auf, der mit einem Anschlag des Federspeicherkolbens in der Weise zusammenwirkt, daß bei einer Bewegung des Federspeicherkolbens in Bremsbetätigungsrichtung das Kraftübertragungsglied vom Federspeicherkolben in Bremsbetätigungsrichtung mitgenommen wird.

Gemäß einer Weiterbildung der Erfindung ist ein als Betriebsbremskolben dienender weiterer Kolben vorgesehen, der ebenfalls mit dem Kraftübertragungsglied direkt oder indirekt zusammenwirkt.

Am Betriebsbremskolben ist vorzugsweise ein zentrisch angeordneter Fortsatz vorgesehen, der sich in den weiteren rohrförmigen Körper hineinerstreckt und am Anschlag des weiteren rohrförmigen Körpers zur Anlage bringbar ist, so daß bei einer Bewegung des Betriebsbremskolbens in Richtung Bremsstellung das Kraftübertragungsglied vom Betriebsbremskolben in der gleichen Bewegungsrichtung mitgeonommen wird.

Vorteilhafterweise kann der Federspeicherkolben mit dem Betriebsbremskolben direkt über eine Schleppverbindung verbunden sein, so daß bei einer Bewegung des Federspeicherkolbens in Bremsbetätigungsrichtung der Betriebsbremskolben vom Federspeicherkolben über die Schleppverbindung mitgenommen wird, wobei der Betriebsbremskolben oder ein mit dem Betriebsbremskolben verbundenes Teil am Kraftübertragungsglied zur Anlage kommt und dieses vom Betriebsbremskolben in Bewegungsrichtung des Federspeicherkolbens mitgenommen wird.

Als Schleppverbindung kann in vorteilhafter Weise auch ein Zugelement dienen, welches entweder den Federspeicherkolben mit dem Kraftübertragungsglied oder den Federspeicherkolben mit dem Betriebsbremskolben verbindet.

Ein Ausführungsbeispiel der Erfindung wird nachstehend anhand der Zeichnung näher erläutert.

Es zeigen:
- **Fig.1**: eine Bremseinrichtung mit einem Federspeicherkolben und einem Betriebsbremskolben, wobei zwischen dem Federspeicherkolben und dem Betriebsbremskolben eine Speicherfeder angeordnet ist, die von einem rohrförmigen Teil des Kraftübertragungsgliedes umgeben ist und
- **Fig.2**: einen Schnitt nach der Linie A-B durch den die beiden Kolben und die Speicherfeder enthaltenden Teil der Bremseinrichtung.

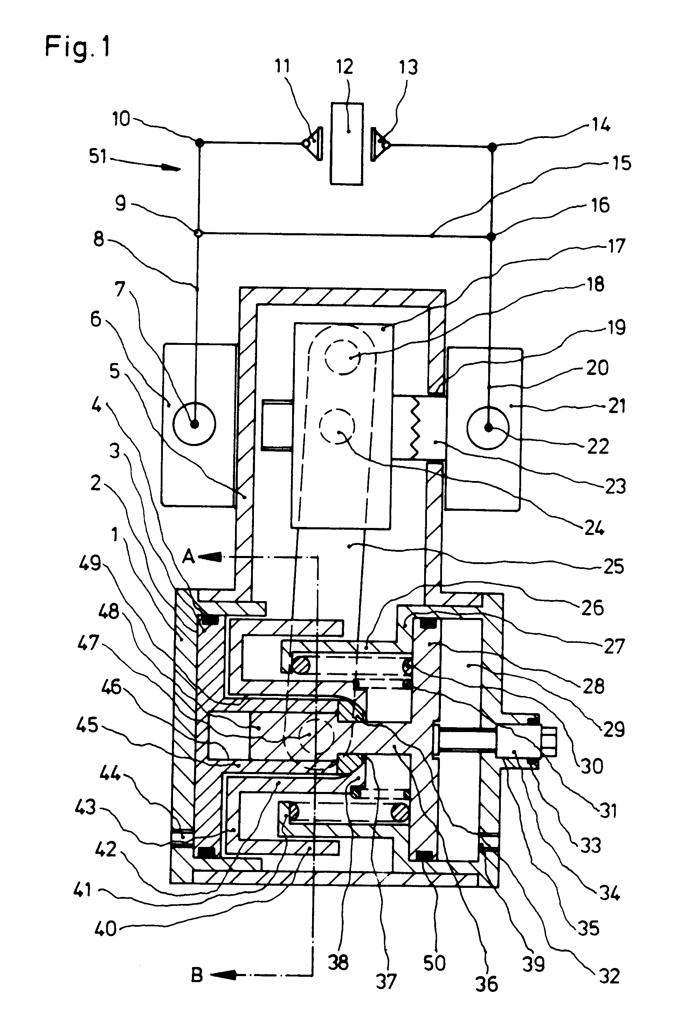

In Fig.1 ist eine Bremseinrichtung dargestellt, die einen Federspeicherbremszylinder und einen Betriebsbremszylinder aufweist.

Der Federspeicherbremszylinder besitzt einen in einem ersten Gehäuseteil (1) mittels eines Dichtringes (50) abgedichtet verschiebbar angeordneten, als Federspeicherkolben dienenden Kolben (28). Der Federspeicherkolben (28) begrenzt eine Druckmittelkammer (29). Die Druckmittelkammer (29 ist über einen Druckmittelanschluß (39) und eine nicht dargestellte Ventileinrichtung wahlweise mit einer Druckmittelquelle oder mit der Atmosphäre bzw. mit einem Rücklauf verbindbar.

Koaxial zum Federspeicherkolben (28) ist diesem gegenüberliegend im ersten Gehäuseteil (1) ein als Betriebsbremskolben (3) dienender weiterer Kolben mittels eines Dichtringes (4) abgedichtet verschiebbar angeordnet. Der Betriebsbremskolben begrenzt eine weitere Druckmittelkammer (2), die über einen weiteren Druckmittelanschluß (44) und eine nicht dargestellte Ventileinrichtung wahlweise mit einer Druckmittelquelle oder mit der Atmosphäre bzw. mit einem Rücklauf verbindbar ist.
Auf seiner der weiteren Druckmittelkammer (2) abgewandten Seite weist der Betriebsbremskolben (3) einen sich in den Gehäuseinnenraum hinein, auf den Federspeicherkolben (28) zu erstreckenden zentrisch angeordneten rohrförmigen Fortsatz (45) auf.

Eine Speicherfeder (30) stützt sich mit ihrem dem Federspeicherkolben (28) abgewandten Ende an einer gehäusefesten Abstützung ab und beauf schlagt den Federspeicherkolben (28) in Richtung auf die diesem zugeordneten Druckmittelkammer (29) zu. Die Abstützung besteht aus einem sich radial nach innen, in den Raum zwischen dem Betriebsbremskolben (3) und dem Federspeicherkolben (28) erstreckenden umlaufenden Vorsprung (41), der Teil einer hülsenförmig ausgebildeten, mit einer Stufe (27) versehenen Wand (26) des ersten Gehäusesteiles (1) ist.
Anders gesagt, ist die Wand (26, 27) nach innen, in Richtung auf den Raum zwischen den beiden Kolben (3) und (28) zu gekröpft ausgebildet und weist an ihrem freien Ende den quer zur Längsachse der beiden Kolben (3, 28) verlaufend, sich in Richtung auf den Fortsatz (45) des Betriebsbremskolbens (3) zu erstreckenden Vorsprung (41) auf.

Die Stufe (27) dient als Anschlag für den Federspeicherkolben (28) in Richtung auf den Betriebsbremskolben (3) zu.

Auf der dem Betriebsbremskolben (3) zugewandten Seite des Federspeicherkolbens (28) ist an diesem zentrisch ein Fortsatz (36, 48) angeordnet, der sich in den Raum (46) des rohrförmigen Forsatzes (45) des Betriebsbremskolbens (3) hineinerstreckt und an seinem freien Ende einen als Anschlag (48) dienenden verdickten Teil aufweist. Der als Anschlag (48) dienende verdickte Teil und der schlanker ausgebildete Teil (36) des Fortsatzes (36, 48) des Federspeicherkolbens (28) können als zwei Einzelteile ausgebildet sein, die miteinander verschraubt sind.

Koaxial zu den beiden Kolben (3) und (28) ist zwischen diesen ein als Kraftübertragungsglied dienender rohrförmiger Körper (42) im ersten Gehäuseteil (1) angeordnet, der sich in den von der Speicherfeder (30) begrenzten Raum hineinerstreckt. Der als Kraftübertragungsglied dienende rohrförmige Körper (42) wird nachstehend der Einfachheit halber als innerer rohrförmiger Körper bezeichnet.
Der innere rohrförmige Körper (42) weist an seiner dem Betriebsbremskolben (3) zugewandten Stirnseite einen quer zur Längsachse des Federspeicherkolbens (28) verlaufenden, sich radial nach außen erstreckenden, als ringscheibenförmiges Teil ausgebildeten Vorsprung (43) auf. Der Vorsprung (43) ist auf der der Speicherfeder (30) abgewandten Seite der Abstützung (26, 41) gelegen. Am freien Endbereich des Vorsprunges (43) ist ein als ein weiterer rohrförmiger Körper ausgebildetes abgewinkeltes Teil (40) angeordnet, welches im wesentlichen parallel zur Längsachse des Federspeicherkolbens (28) verläuft und sich in Richtung auf den Federspeicherkolben (28) zu erstreckt. Der weitere rohrförmige Körper (40) umgibt die Speicherfeder (30) und die Abstützung (26, 27, 41) für die Speicherfeder (30) auf einen Teil ihrer axialen Erstreckung und wird der Einfachheit halber nachfolgend als äußerer rohrförmiger Körper bezeichnet.

Das freie Ende des sich in den von der Speicherfeder (30 begrenzten Raum hineinerstreckenden inneren rohrförmigen Körpers (42) besitzt einen mit einer auf der Innenseite dieses rohrförmigen Körpers (42) mit einer Abrundung versehenen, sich nach innen, in Richtung auf die Längsachse des Fortsatzes (45) des Betriebsbremskolbens (3) zu erstreckenden, als Anschlag (38) dienenden umlaufenden Vorsprung.

In dem freien Raum (49) des inneren rohrförmigen Körpers (42) ist ein als Druckstück (32) dienendes, auf der Seite des Anschlages (38) abgerundetes Teil angeordnet, welches an dem Anschlag (38) anliegt.

Der rohrförmige Fortsatz (45) des Betriebsbremskolbens (3) erstreckt sich in den inneren rohrförmigen Körper (42) hinein und ist in seiner axialen Erstreckung so bemessen, daß seine dem Federspeicherkolben (28) zugewandte freie Stirnseite am Druckstück (32) anliegt.

Der Fortsatz (36, 48) des Federspeicherkolbens (28) erstreckt sich in den inneren rohrförmigen Körper (42) des Kraftübertragungsgliedes (40, 43, 42) hinein und taucht in den Raum (46) des rohrförmigen Fortsatzes (45) des Betriebsbremskolbens (3) ein. Der Anschlag (38) des inneren rohrförmigen Körpers (42) und der Anschlag (48) des Fortsatzes (36, 48) des Federspeicherkolbens (28) sind so zueinander angeordnet, daß der Anschlag (48) des Fortsatzes (36, 48) des Federspeicherkolbens (28) auf der Seite des Anschlages (38) des inneren rohrförmigen Körpers (42) des Kraftübertragungsgliedes (40, 43, 42) gelegen ist, die dem Federspeicherkolben (28) abgewandt ist.

Von dem am Fortsatz (36, 48) des Federspeicherolbens (28) angeordneten Anschlag (48) und dem am inneren rohrförmigen Körper (42) des Kraftübertragungsgliedes (40, 43, 42) angeordneten Anschlag (38) wird die Schleppverbindung zwischen dem Federspeicherkolben (28) und dem aus dem äußeren rohrförmigen Körper (40) mit dem ringscheibenförmigen Teil (43) und dem inneren rohrförmigen Körper (42) mit Anschlag (38) bestehenden Kraftübertragungsglied (40, 43, 42, 38) gebildet.

Der als Federspeicherkolben dienende Kolben (28) mit Fortsatz (36, 48), der als Betriebsbremskolben dienende weitere Kolben (3) mit Fortsatz (45) und das Kraftübertragungsglied (40, 43, 42, 38) sind in Richtung ihrer Längsachse relativ zueinander bewegbar.

Eine weitere Feder (31) stützt sich an der dem Betriebsbremskolben (3) zugewandten Seite des Federspeicherkolbens (28) ab und beaufschlagt den inneren rohrförmigen Körper (42) des Kraftübertragungsgliedes (40, 43, 42) in Richtung auf den Betriebsbremskolben (3) zu.
Die weitere Feder (31) kann sich selbstverständlich auch an einem Gehäusevorsprung abstützen und einen anderen Bereich des Kraftübertragungsgliedes (40, 43, 42) in Richtung auf den Betriebsbremskolben (3) zu beaufschlagen. Z.B. wäre eine Abstützung für die weitere Feder (31) der Vorsprung (41) der Abstützung für die Speicherfeder (30) und die Beaufschlagung des zwischen dem Vorsprung (41) der Abstützung und dem Betriebsbremskolben (3) gelegenen ringscheibenförmigen Teiles (43) des Kraftübertragungsgliedes (40, 43, 42) in Richtung auf den Betriebsbremskolben (3) zu denkbar.

In einer abgestuften Ausnehmung (35) der Wand des ersten Gehäuseteiles (1) ist eine sich in die dem Federspeicherkolben (28) zugeordnete Druckmittelkammer (29) hineinerstreckende Schnell-Löseeinrichtung (34) mittels eines Dichtringes (33) abgedichtet gelagert. Die Schnell-Löseeinrichtung ist zentrisch zu dem Federspeicherkolben (28) angeordnet und steht mit diesem in Wirkverbindung.

Der äußere rohrförmige Körper (40) des Kraftübertragungsgliedes (40, 43, 42, 38) ist über zwei Gelenkstellen (47), die aus an der äußeren Mantelfläche des äußeren rohrförmigen Körpers (40) einander gegenüberliegend angeordneten Lagerzapfen und zwei diese umschließenden Lageraugen bestehen, mit dem jeweils einen Ende je eines Hebels (25) gelenkig verbunden, der Teil eines Bremsgestänges ist. Die beiden Hebel (25), von denen in der Zeichnung nur einer dargestellt ist, sind parallel zueinander angeordnet (deckungsgleich) und weisen einen Abstand voneinander auf, der von dem Außendurchmesser des äußeren rohrförmigen Körpers (40) bestimmt ist.

Quer zur Längsachse des ersten Gehäuseteiles (1) verlaufend ist ein zweites Gehäuseteil (5) angeflanscht, dessen Innenraum mit dem Innenraum des ersten Gehäuseteiles (1) verbunden ist.

In das zweite Gehäuseteil (5) erstrecken sich die beiden mit dem Kraftübertragungsglied (40, 42, 43, 38) gelenkig verbundenen Hebel (25) hinein. Die beiden Hebel (25) sind jeweils mit ihrem im zweiten Gehäuseteil (5) gelegenen Ende um je eine gehäusefeste Gelenkstelle (18) schwenkbar im zweiten Gehäuseteil (5) gelagert.

Quer zur Längsrichtung der Hebel (25) ist in einer Wand des zweiten Gehäuseteiles (5) eine Durchgangsöffnung (19) vorgesehen, durch welche ein Teil (23) eines Bremsbetätigungsgliedes (21, 23), welches ebenfalls Teil des Bremsgestänges ist, hindurchgeführt ist.
Der sich in das zweite Gehäuseteil (5) hineinerstreckende Teil (23) des Bremsbetätigungsgliedes 21, 23) ist mittels an den Hebeln (25) einander gegenüberliegend angeordneten Gelenkstellen (24) gelenkig mit den Hebeln (25) verbunden.

Die das Bremsbetätigungsglied (21, 23) mit den Hebeln (25) verbindenden Gelenkstellen (24) an den Hebeln (25) sind zwischen den an den einander abgewandten Enden der beiden Hebel (25) angeordneten Gelenkstellen (47) und (18) gelegen.

Das außerhalb des zweiten Gehäuseteiles (5) gelegene Teil (21) des Bremsbetätigungsgliedes (21, 23) ist mit einer Bremszange (51) verbunden.
Die Bremszange (51) weist zwei parallel zueinander verlaufende Bremshebel (20) und (8) sowie eine diese Bremshebel (20, 8) über Gelenkstellen (16) und (9) miteinander verbindende Verbindungsstange (15) auf. Der eine Bremshebel (20) ist mit seinem einen Ende an einer Gelenkstelle (22) des Bremsbetätigungsgliedes (21, 23) gelagert und mit seinem anderen Ende über eine Gelenkstelle (14) mit einer Bremsbacke (13) verbunden.

Der andere Bremshebel (8) ist mit seinem einen Ende an einer Gelenkstelle (7) eines mit dem zweiten Gehäuseteil (5) verbundenen Lagerbockes (6), der auf der dem Bremsbetätigungsglied (21, 23) abgewandten Seite des zweiten Gehäuseteiles (5) am zweiten Gehäuseteil (5) befestigt ist, gelagert und mit seinem anderen Ende über eine Gelenkstelle (10) mit einer zweiten Bremsbacke (11) verbunden.
Zwischen den beiden Bremsbacken (13) und (11) ist eine Bremsscheibe (12) vorgesehen.

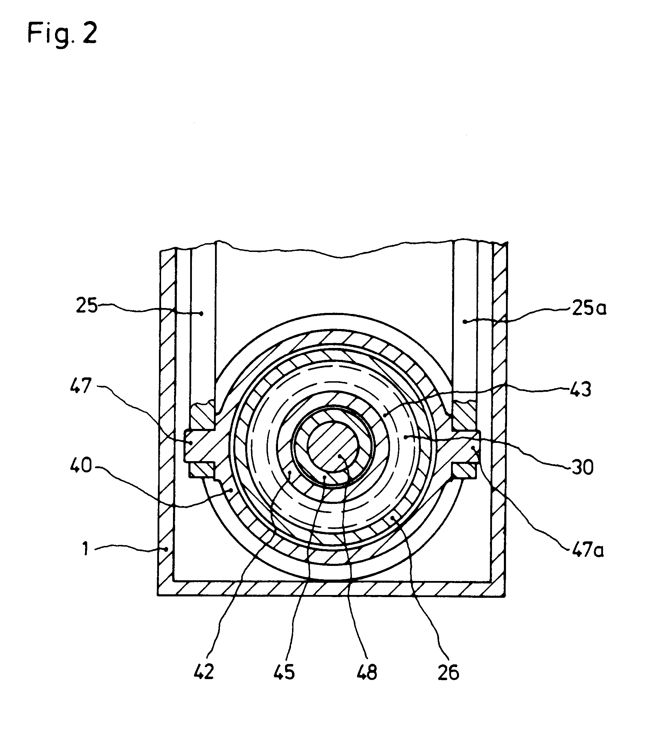

Fig.2 zeigt einen Schnitt durch den das Kraftübertragungsglied und die Speicherfeder sowie die beiden Kolben aufweisenden Teil des ersten Gehäuseteiles (1) nach der Linie A-B gemäß Fig.1.
Der besseren übersicht halber sind die den in Fig.1 gezeigten Bauteilen gleichen Bauteile mit gleichen Bezugszeichen versehen.

In der Abbildung ist im Gehäuseteil (1) das aus dem äußeren rohrförmigen Körper (40), dem ringscheibenförmigen Teil (43) und dem inneren rohrförmigen Körper (42) bestehende Kraftübertragungsglied dargestellt. Koaxial zum inneren rohrförmigen Körper (42) ist in dessen Innenraum der rohrförmige Fortsatz (45) des Betriebsbremskolbens dargestellt, in den der Anschlag (48) des Fortsatzes (36, 48) des Federspeicherkolbens (28) eintaucht.
Die Speicherfeder (30) ist in dem Raum gelegen, der von dem äußeren rohrförmigen Körper (40), dem ringscheibenförmigen Teil (43) und dem inneren rohrförmigen Körper (42) des Kraftübertragungsgliedes (40, 43, 42, 38) begrenzt wird.

An der äußeren Mantelfläche des äußeren rohrförmigen Körpers (40) des Kraftübertragungsgliedes (40, 43, 42) sind einander gegenüberliegend zwei Lagerzapfen (47) und (47a) vorgesehen, die mit an den Enden der Hebel (25) und (25a) vorgesehenen Lageraugen die Lagerstellen für die Hebel (25) und (25a) bilden.

Wie aus Fig.2 deutlich erkennbar ist, wird die Speicherfeder (30) nicht direkt von dem äußeren rohrförmigen Körper (40) des Kraftübertragungsgliedes (40, 43, 42) umgeben sondern wird die Speicherfeder (30) von der hülsenförmigen Abstützung (26, 41) für die Speicherfeder (30) umschlossen, die wiederum von dem äußeren rohrförmigen Körper (40) des Kraftübertragungsgliedes (40, 43, 42) umgeben ist.

Die Funktion der im vorstehenden beschriebenen Bremseinrichtung wird unter Zuhilfenahme der Fig.1 und 2 nachfolgend näher erläutert.
Es wird angenommen, daß diese Bremseinrichtung mit Druckluft betrieben wird.

In der Abbildung sind die vom Betriebsbremskolben (3) begrenzte Druckmittelkammer (2) und die vom Federspeicherkolben (28) begrenzte Druckmittelkammer (29) drucklos. Der Federspeicherkolben (28) ist durch einen einem Entlüftungsvorgang vorangegangenen Belüftungsvorgang der ihm zugeordneten Druckmittelkammer (29) in eine Position gebracht worden, in welcher er die Speicherfeder (30) gespannt hat. Mittels der Schnell-Löseeinrichtung (34) wird der Federspeicherkolben (28) am Anschlag (27) und somit die Speicherfeder (30) gespannt gehalten. Die Bremse ist gelöst.

Wird in die dem Betriebsbremskolben (3) zugeordnete Druckmittelkammer (2) und in die dem Federspeicherkolben (28) zugeordnete Druckmittelkammer (29) Druckluft eingesteuert, so bleibt die Lage des Federspeicherkolbens (28) unverändert.
Der Betriebsbremskolben (3) wird durch die Kraft des sich in der ihm zugeordneten Druckmittelkammer (2) aufbauenden Druckes (Bremsdruck) nach rechts, in Richtung auf den Federspeicherkolben (28) zu verschoben. Von dem rohrförmigen Fortsatz (45) des Betriebsbremskolbens (3) und dem Druckstück (32), welches am Anschlag (38) des inneren rohrförmigen Körpers (42) des Kraftübertragungsgliedes (40, 42, 43) anliegt wird dieser rohrförmige Körper (42) und somit das gesamte Kraftübertragungsglied (40, 43, 42) gegen die Kraft der zweiten Feder (31) ebenfalls nach rechts in Richtung auf den Federspeicherkolben (28) zu bewegt.
Der am Fortsatz (36, 48) des Federspeicherkolbens (28) angeordnete Anschlag (48) wird dabei von dem am Anschlag (38) des inneren rohrförmigen Körpers (42) des Kraftübertragungsgliedes (40, 43, 42) anliegenden Druckstück (32) abgehoben. Durch die Relativbewegung zwischen dem Betriebsbremskolben (3) und dem Federspeicherkolben (28) taucht der Fortsatz (36, 48) des Federspeicherkolbens (28) weiter in die Ausnehmung (46) des rohrförmigen Fortsatzes (45) des Betriebsbremskolbens (3) ein.

Die über die Gelenkstellen (47) mit dem Kraftübertragungsglied (40, 43, 42) verbundenen Hebel (25) und (25a) werden bei diesem Vorgang um die an den diesen Enden der Hebel (25, 25a) gegenüberliegenden Enden der Hebel (25, 25a) vorgesehenen Gelenkstellen (18) entgegen dem Uhrzeigersinn verschwenkt. Dabei wird das über die Gelenkstellen (24) an den Hebeln (25, 25a) mit den Hebeln (25, 25a) gelenkig verbundene Bremsbetätigungsglied (21, 23) nach rechts, vom zweiten Gehäuseteil (5) weg bewegt.

Der Bremshebel (20) und der Bremshebel (8) der Bremszange (51) werden bei diesem Vorgang mit ihren Bremsbacken (13) und (11) vom Bremsbetätigungsglied (21, 23) auf die Bremsscheibe (12) zu bewegt und kommen an dieser zur Anlage, wodurch eine Bremsung bewirkt wird.

Soll die Bremse wieder gelöst werden, so werden die dem Betriebsbremskolben (3) zugeordnete Druckmittelkammer (2) und die dem Federspeicherkolben (28) zugeordnete Druckmittelkammer (29) entlüftet. Durch die Kraft der zweiten Feder (31) wird das Kraftübertragungsglied (40, 43, 42) nach links, von dem Federspeicherkolben (28) weg verschoben.

Mittels des am inneren rohrförmigen Körper (42) des Kraftübertragungsgliedes (40, 43, 42) angeordneten Anschlages (38), das Druckstück (32) und den rohrförmigen Fortsatz (45) des Betriebsbremskolbens (3) wird der Betriebsbremskolben (3) vom Kraftübertragungsglied (40, 43, 42) ebenfalls nach links vom Federspeicherkolben (28) weg verschoben.

Das Druckstück (32) kommt wieder am Anschlag (48) des Fortsatzes (36, 48) des Federspeicherkolbens (28) zur Anlage.
Die mit dem Kraftübertragungsglied (40, 43, 42, 38) über die Gelenkstellen (47) verbundenen Hebel (25) und (25a) werden um die Gelenkstelle (18) im Uhrzeigersinn verschwenkt.
Dabei wird das Bremsbetätigungsglied (21, 23) von den Hebeln (25) und (25a) in Richtung auf das zweite Gehäuseteil (5) zu bewegt und so die Bremszange (51) gelöst.

Bei den vorstehend beschriebenen Vorgängen bleibt die Lage des Federspeicherkolben (28) unverändert. Die Speicherfeder (30) bleibt gespannt.

Soll die Bremseinrichtung durch Federkraft in Bremsstellung gebracht werden, so wird die Schnell-Löseeinrichtung (34) in ihre Lösestellung gebracht. Durch die Kraft der Speicherfeder (30) wird der Federspeicherkolben (28) nach rechts, von dem Betriebsbremskolben (3) weg verschoben.

Das Kraftübertragungsglied (40, 43, 42) wird vom Federspeicherkolben (28) mittels der den Federspeicherkolben (28) mit dem Kraftübertragungsglied (40, 43, 42) verbindenden Schleppverbindung (Fortsatz (36) mit Anschlag (48) des Federspeicherkolbens (28) und Anschlag (38) des inneren rohrförmigen Körpers (42) des Kraftübertragungsgliedes (40, 43, 42) mit Druckstück (32)) mitgenommen und so nach rechts in Richtung vom Betriebsbremskolben (3) wegbewegt. Dabei werden die mit dem Kraftübertragungsglied (40, 43, 42) über die Gelenkstellen (47) verbundenen Hebel (25) und (25a) entgegen dem Uhrzeigersinn um die Gelenkstellen (18) verschwenkt.

Das Bremsbetätigungsglied (21, 23) wird von den Hebel (25, 25a) in Richtung vom zweiten Gehäuseteil (5) wegbewegt und die mit dem Bremsbetätigungsglied (21, 23) verbundene Bremszange (51) wird in der Weise betätigt, daß die Bremsbacken (13, 11) an der Bremsscheibe (12) zur Anlage kommen.

Soll die Bremseinrichtung wieder in die Lösestellung gebracht werden, so wird die dem Federspeicherkolben (28) zugeordnete Druckmittelkammer (29) mit Druckluft (Lösedruck) beaufschlagt.

Durch die Kraft des sich in dieser Druckmittelkammer (29) aufbauenden Druckes wird der Federspeicherkolben (28) nach links, in Richtung auf den Betriebsbremskolben (3) zu verschoben. Die Speicherfeder (30) wird gespannt.

Durch die Kraft der zweiten Feder (31) wird das Kraftübertragungsglied (40, 43, 42) ebenfalls nach links, in Richtung auf den Betriebsbremskolben (3) zu bewegt, und zwar so weit, bis das am Anschlag (38) des inneren rohrförmigen Körpers (42) anliegende Druckstück (32) an der Stirnseite des rohrförmigen Fortsatzes (45) des Betriebsbremskolbens (3) zur Anlage kommt.

Die mit dem Kraftübertragungsglied (40, 43, 42) gelenkig verbundenen Hebel (25, 25a) werden im Uhrzeigersinn um die Gelenkstellen (18) verschwenkt, wobei das mit der Bremszange (51) verbundene Bremsbetätigungsglied (21, 23) in Richtung auf die Wand des zweiten Gehäuseteiles (5) zu bewegt wird. Die Bremszange (51) gibt die Bremsscheibe (12) wieder frei.

Werden die dem Betriebsbremskolben (3) zugeordnete Druckmittelkammer (2) und die dem Federspeicherkolben (28) zugeordnete Druckmittelkammer (29) gleichzeitig belüftet, so werden der Betriebsbremsolben (3) und der Federspeicherkolben (28) aufeinander zu bewegt.

Die Bremszange (51) gelangt dabei in die Bremsstellung, wird aber nur durch die auf den Betriebsbremskolben einwirkende Kraft in dieser Stellung gehalten, da sich der Federspeicherkolben (28) in seiner Bremslösestellung (Speicherfeder (30) gespannt) befindet.

Das Kraftübertragungsglied (40, 43, 42) kann, wie in der Zeichnung dargestellt, einen inneren rohrförmigen Körper (42) und ein den inneren rohrförmigen Körper (42) mit dem äußeren rohrförmigen Körper (40) verbindendes ringscheibenförmiges Teil (43) aufweisen. Das Kraftübertragungsglied kann jedoch auch aus einem die Speicherfeder (30) und deren Abstützung (26, 27, 41) umgebenden rohrförmigen Körper (40) bestehen, der einerseits direkt von dem Betriebsbremskolben (3) in Bremsbetätigungsrichtung beauf schlagbar ist und andererseits über eine Schleppverbindung zwischen dem Federspeicherkolben (28) und dem Betriebsbremskolben (3) in Bremsbetätigungsrichtung bewegt werden kann, wobei bei einer Bewegung des Federspeicherkolbens (28) mittels der Kraft der Speicherfeder (30) der Betriebsbremskolben (3) über die Schleppverbindung mitgenommen wird, am rohrförmigen Körper (40) zur Anlage kommt und diesen in Bremsbetätigungsrichtung mitnimmt.

Die Schleppverbindung kann aus zwei Anschlägen bestehen, wobei ein Anschlag am Kraftübertragungsglied (40, 43, 42) und ein Anschlag am Federspeicherkolben (28) angeordnet ist, sie kann aber auch aus einem biegsamen Zugelement bestehen, welches einerseits am Federspeicherkolben (28) und andererseits an einem mit dem Kraftübertragungsglied (40, 43, 42) verbundenen Teil befestigt ist. Die biegsam ausgebildete Schleppverbindung (Seilverbindung) kann auch zwischen den einander zugewandten Seiten des Betriebsbremskolbens (3) und des Federspeicherkolbens (28) hergestellt werden und so diese beiden Kolben miteinander verbinden, wobei wie bereits erwähnt, bei einer Bewegung des Federspeicherkolbens (28) in Bremsbetätigungsrichtung das Kraftübertragungsglied (40, 43, 42) oder auch nur der als Kraftübertragungsglied dienende rohrförmige Körper (40) über die Schleppverbindung und den Betriebsbremskolben (3) in Bremsbetätigungsrichtung mitgenommen wird.

Die erfindungsgemäße Bremseinrichtung kann auch als einfacher Federspeicherbremszylinder ausgebildet sein. In einem solchen Fall wird auf die Anordnung des als Betriebsbremskolben (3) bezeichneten weiteren Kolbens verzichtet.

Von Bedeutung für die Erfindung ist, daß das Kraftübertragungsglied einen quer zur Längsachse wenigstens des Federspeicherkolbens (28) verlaufend angeordneten Vorsprung aufweist, der auf der der Speicherfeder (30) abgewandten Seite der Abstützung (26, 41) für die Speicherfeder (30) gelegen ist, und daß dieser Vorsprung (43) an seinem freien Ende einen abgewinkelten Teil (40) aufweist, der im wesentlichen parallel zur Längsachse des Kolbens (28) verläuft und sich in Richtung auf den Kolben (28) zu erstreckt, wobei der abgewinkelte Teil (40) im wesentlichen parallel zur Längsachse der Speicherfeder (30) außerhalb der Speicherfeder anzuordnen ist. Die Lagerstelle (47) bzw. die Lagerstellen (47) und (47a) für den Hebel (25) bzw. die Hebel (25) und (25a) des Bremsgestänges (51, 25) ist bzw. sind an dem abgewinkelten Teil (40) im Bereich der Speicherfeder (30) anzuordnen.

Der am Kraftübertragungsglied (42) angeordnete Vorsprung (43) kann, wie bereits beschrieben, als ein ringscheibenförmiges Teil ausgebildet sein, er kann aber auch als ein plattenförmiger Körper ausgebildet werden.

Natürlich ist es auch möglich, anstelle eines ringscheibenförmigen Teiles oder anstelle eines plattenförmigen Körpers den Vorsprung oder die Vorsprünge als sich nach außen erstreckende armartige Teile auszubilden.

Der abgewinkelte Teil (40) des Vorsprungs (43) des Kraftübertragungsgliedes (42) kann als ein rohrförmiger Körper ausgebildet sein, wie bereits beschrieben, er kann aber auch aus einem oder mehreren armartigen Teilen bestehen. Ist das mit dem Federspeicherkolben (28) oder einem Teil des Federspeicherkolbens (28) direkt zusammenwirkende Teil des Kraftübertragungsgliedes (42) als ein rohrförmiger Körper ausgebildet so ist dieser so anzuordnen, daß er sich in den von der Speicherfeder (30) begrenzten Raum hineinerstreckt, um eine Raumersparnis zu erzielen.

Der Anschlag (38) des Kraftübertragungsgliedes (40, 43, 42) und das mit diesem Anschlag (38) sowie mit dem am Fortsatz (36) des Federspeicherkolbens (28) angeordneten Anschlag (48) zusammenwirkende Teil (Druckstück (32)) sind abgerundet ausgebildet, so daß zwischen dem Federspeicherkolben (28) und dem Kraftübertragungsglied (40, 43, 42) eine pfannenartige Gelenkstelle gebildet ist, die eine leichte Verschwenkbewegung des Kraftübertragungsgliedes (40, 43, 42) gegenüber dem Federspeicherkolben (28) erlaubt.

## Patentansprüche

1. Bremseinrichtung, insbesondere für Schienenfahrzeuge, mit folgenden Merkmalen:
a) es ist ein Zylinder (50) mit einem als Federspeicherkolben deinenden Kolben (28) vorgesehen, der von einem Druckmittel aus einer Druckmittelkammer (29) gegen die Kraft einer Speicherfeder (30) beaufschlagbar ist;
b) die Speicherfeder (30) stützt sich mit ihrem einen Ende an einer gehäusefesten Abstützung (26, 41) ab und beaufschlagt mit ihrem anderen Ende den Kolben (28) auf seiner der Druckmittelkammer (29) abgewandten Seite;
c) es ist ein mit einem Bremsgestänge (51, 25) und dem Kolben (28) oder mit einem mit dem Kolben (28) verbundenen Teil in Wirkverbindung stehendes Kraftübertragungsglied (42) vorgesehen;
d) das Kraftübertragungsglied (42) weist wenigstens eine Lagerstelle (47) für einen Hebel (25) des Bremsgestänges (51, 25) auf, dessen Längsachse quer zu der Längsachse des Kolbens (28) verläuft;
gekennzeichnet durch die folgenden Merkmale:
e) das Kraftübertragungsglied (42) weist wenigstens einen quer zur Längsachse des Kolbens (28) verlaufend angeordneten Vorsprung (43) auf, der auf der der Speicherfeder (30) abgewandten Seite der Abstützung (26, 41) gelegen ist;
f) der Vorsprung (43) weist einen abgewinkelten Teil (40) auf, der im wesentlichen parallel zur Längsachse des Kolbens (28) verläuft und sich in Richtung auf den Kolben (28) zu erstreckt;
d) der abgewinkelte Teil (40) ist im wesentlichen parallel zur Längsachse der Speicherfeder (30) außerhalb der Speicherfeder (30) angeordnet;
h) die Lagerstelle (47) für den Hebel (25) des Bremsgestänges (51, 25) ist an dem abgewinkelten Teil (40) im Bereich der Speicherfeder (30) angeordnet.

2. Bremseinrichtung nach Anspruch 1, dadurch gekennzeichnet, daß der Vorsprung (43) des Kraftübertragungsgliedes (42) als ein plattenförmiger Körper ausgebildet ist.

3. Bremseinrichtung nach Anspruch 1, dadurch gekennzeichnet, daß der Vorsprung (43) des Kraftübertragungsgliedes (42) als ein ringscheibenförmiges Teil ausgebildet ist.

4. Bremseinrichtung nach Anspruch 1, dadurch gekennzeichnet, daß der abgewinkelte Teil (40) des Vorsprunges (43) des Kraftübertragungsgliedes (42) als ein rohrförmiger Körper ausgebildet ist.

5. Bremseinrichtung nach Anspruch 1, dadurch gekennzeichnet, daß das mit dem Kolben (28) oder einem Teil (36, 48) des Kolbens (28) direkt zusammenwirkende Teil des Kraftübertragungsgliedes (42) als ein rohrförmiger Körper ausgebildet ist, der sich in den von der Speicherfeder (30) begrenzten Raum hineinerstreckt.

6. Bremseinrichtung nach den Ansprüchen 1 und 5, dadurch gekennzeichnet, daß der rohrförmige Körper (42) an seinem dem Kolben (28) zugewandten freien Endbereich einen Anschlag (38) aufweist, der mit einem Anschlag (48), welcher an einem in Richtung der Längsachse des Kolbens (28) verlaufenden, sich in den rohrförmigen Körper (42) hineinerstreckenden Fortsatz (36) des Kolbens (28) angeordnet ist direkt oder über ein Druckstück (32) in Wirkverbindung steht, derart, daß bei einer durch die Speicherfeder (30) bewirkten Bewegung des Kolbens (28) das Kraftübertragungsglied (42) in der gleichen Bewegungsrichtung mitgenommen wird.

7. Bremseinrichtung nach wenigstens einem der vorhergehenden Ansprüche, gekennzeichnet durch die folgenden Merkmale:
a) es ist ein als Betriebsbremskolben dienender weiterer Kolben (3) vorgesehen, der dem als Federspeicherkolben dienenden Kolben (28) gegenüber liegend angeordnet ist;
b) der weitere Kolben (3) ist von einem Druckmittel in einer weiteren Druckmittelkammer (2) in Richtung auf den von der Speicherfeder (30) beaufschlagten Kolben (28) zu bewegbar;
c) der als Federspeicherkolben dienende Kolben (28) und der als Betriebsbremskolben dienende weitere Kolben (2) sind so zueinander angeordnet, daß die Speicherfeder (30), die gehäusefeste Abstützung (26, 41) und das Kraftübertragungsglied (42) zwischen den einander zugewandten Seiten des als Federspeicherkolben dienenden Kolbens (28) und des weiteren Kolbens (2) gelegen sind;
d) der weitere Kolben (3) weist einen sich in Richtung auf den als Federspeicherkolben dienenden Kolben (28) zu erstreckenden rohrförmigen Fortsatz (45) auf;
e) der rohrförmige Fortsatz (45) des weiteren Kolbens (3) und der Fortsatz (36, 48) des als Federspeicherkolben dienenden Kolbens (28) sind so zueinander angeordnet und so bemessen, daß sich der Fortsatz (36, 48) des als Federspeicherkolben dienenden Kolbens (28) in den rohrförmigen Fortsatz (45) des weiteren Kolbens (3) hineinerstreckt;
f) der rohrförmige Körper (42) des Kraftübertragungsgliedes, der Fortsatz (45) des weiteren Kolbens (3) und der Fortsatz (36, 48) des als Federspeicherkolben dienenden Kolbens (28) sind koaxial zueinander angeordnet, wobei der rohrförmige Körper (42) die beiden Fortsätze (45) und (36, 48) auf einem Teil ihrer axialen Erstreckung umgibt;
g) der Fortsatz (45) des weiteren Kolbens (3) ist in seiner axialen Erstreckung so bemessen und mit seiner freien Stirnseite so zum Anschlag (38) des rohrförmigen Körpers (42) angeordnet, daß er bei einer Bewegung des weiteren Kolbens (3) in Richtung auf den als Federspeicherkolben dienenden Kolbens (28) zu mit seiner freien Stirnseite am Anschlag (38) des rohrförmigen Körpers (42) bzw. an einem mit dem Anschlag (38) des rohrförmigen Körpers (42) in Verbindung stehenden Teil (32) zur Anlage kommt und das Kraftübertragungsglied in Bewegungsrichtung des weiteren Kolbens (3) mitnimmt.

8. Bremseinrichtung nach wenigstens einem der vorhergehenden Ansprüche, dadurch gekennzeichnet, daß ein das Kraftübertragungsglied (42) in Richtung auf den weiteren Kolben (3) zu beaufschlagendes weiteres Federelement (31) vorgesehen ist.

9. Bremseinrichtung nach wenigstens einem der vorhergehenden Ansprüche, dadurch gekennzeichnet, daß das Kraftübertragungsglied (42) in oder an der äußeren Mantelfläche seines abgewinkelten Teiles (40) zwei Lagerstellen (47 und 47a) aufweist, wobei jede Lagerstelle (47 bzw. 47a) für je einen mit einem Teil (23) des Bremsgestänges in Wirkverbindung stehenden Hebel (25 und 25a) vorgesehen ist.

10. Bremseinrichtung nach wenigstens einem der vorhergehenden Ansprüche, dadurch gekennzeichnet, daß zwischen dem als Federspeicherkolben dienenden Kolben (28) und dem Kraftübertragungsglied (42) der mit dem Druckstück (32) in Verbindung stehende Anschlag (38) des rohrförmigen Körpers (42) des Kraftübertragungsgliedes und der am Fortsatz (36) des als Federspeicherkolben dienenden Kolbens (28) angeordnete Anschlag (48) gelegen sind und als Schleppverbindung ausgebildet sind.

11. Bremseinrichtung nach wenigstens einem der vorhergehenden Ansprüche, dadurch gekennzeichnet, daß als Schleppverbindung ein am Fortsatz (36) des als Federspeicherkolben dienenden Kolbens (28) vorgesehener Anschlag dient, welcher mit einem am bzw. im weiteren Kolben (3) vorgesehenen Anschlag in der Weise zusammenwirkt, daß bei einer Bewegung des als Federspeicherkolben dienende Kolbens (28) in Richtung auf die diesem Kolben (28) zugeordnete Druckmittelkammer (29) zu der weitere Kolben (3) von dem als Federspeicherkolben dienenden Kolben (28) mitgenommen wird, wobei das Kraftübertragungsglied (42) mittels des weiteren Kolbens (3) in der gleichen Bewegungsrichtung wie der als Federspeicherkolben dienende Kolben (28) und der weitere Kolben (3) mitbewegt wird.

12. Bremseinrichtung nach wenigstens einem der vorhergehenden Ansprüche, dadurch gekennzeichnet, daß als Schleppverbindung ein Zugelement vorgesehen ist, welches den als Fedespeicherkolben dienenden zweiten Kolben (28) und den weiteren Kolben (3) miteinander verbindet.

## Claims

1. BRAKE DEVICE,
especially for railbound vehicles, having the salient features detailed below:
a) a cylinder (50) with a piston (28) serving as spring magazine and an associated pressuriser tank chamber (29) from which it may be pressurised against the force of an accumulator spring (30).
b) the accumulator spring (30) resting at one end on a support (26, 41), fixed to the housing and with its other end applying pressure to the piston (28) at that end of the latter which is opposed to the pressuriser chamber (29);
c) a power transmitting element (42) being in active connection via a brake rod assembly (51, 25) with the piston (28) or a part associated therewith;
d) the power transmitting element (42) having at least one bearing point (47) for a lever (25) of the brake rod assembly (51, 25) whereof the longitudinal axis is transversely arranged relative to the longitudinal axis of the piston (28);
and characterised by:
e) the power transmitting element (42) having at least one projection (43) arranged transversely to the longitudinal axis of piston (28) and located on that end of the accumulator spring (30) which is opposed to the support (26, 41);
f) the projection (43) having an annular portion (40) essential by parallel to the longitudinal axis of the piston (28) and extending towards the said piston (28);
g) this angular portion (40) being essentially parallel to the accumulator spring (30) and arranged outside the same.

2. BRAKE DEVICE,
to Claim 1,
characterised by:
the projection (43) of the power transmitting element (42) being designed in plate form.

3. BRAKE DEVICE,
to Claim 1,
characterised by:
the projection (43) of the power transmitting element (42) being designed as an annular disc.

4. BRAKE DEVICE,
to Claim 1,
characterised by:
The angular portion (40) of the projection (43) of the power transmitting element (42) being designed as a tubular body.

5. BRAKE DEVICE,
to Claim 1,
characterised by:
the sector of the power transmitting element (42) directly in active association with the piston (28) or any part thereof (36, 48) being designed as a tubular body extending into the area bounded by the accumulator spring (30).

6. BRAKE DEVICE,
to Claims 1 and 5,
characterised by:
the tubular body (42) having a stop (38) arranged at its free end facing the piston (28) and actively connected direct or via a pressure piece (32) with a further stop (48) arranged in the direction of the longitudinal axis of the piston (28) or the extension (36) of the piston (28) extending into the tubular body (42) so that when the accumulator spring (30) initiates a movement of the piston (28) the power transmitting element (42) is carried along in the same direction.

7. BRAKE DEVICE, to at least one of the Claims 1 to 6, characterised by the following salient features:
a) a further piston (3) being provided to serve as operating brake piston and arranged opposite the spring magazine piston (28);
b) the second piston (3) being pressurized via a pressurizer arranged in a second pressurizer chamber (2) and movable towards the piston (28) under pressure of the accumulator spring (30);
c) the piston serving as spring magazine (28) and the operating brake piston (3) being arranged relative to each other so that the accumulator spring (30) and the support fixed to the housing (26, 40) as well as the power transmitting element (42) must be located between the facing sides of the magazine piston (28) and the second piston (3);
d) the second piston (3) having a tubular extension or projection (45) continuing towards the magazine piston (28)
e) the tubular projection (45) of the second piston (3) and the projection (36, 48) of the magazine piston (28) being so arranged relative to each other and so dimensioned as to procure that the projections (36, 48) of the magazine piston (28) shall extend into the tubular projection (45) of the second piston (3);
f) the tubular body (42) of the power transmitting element and the projection (45) of the second piston (3) together with the projections (36, 48) of the spring magazine piston (28) being in co-axial arrangement relative to each other so that the tubular body (42) partially encloses the projections (45 and 36, 48) over a portion of their axial extent;
g) the projection (45) of the second piston (3) being so dimensioned in its axial extent and arranged with its free front face towards the stop (38) of the tubular body (42) as to procure that when the second piston (3) moves towards the spring magazine piston (28) it must come into flush contact at its free front face with the stop (38) of the tubular body (42) or a part (32) associated therewith and thus carry along the power transmitting element in the direction in which the second piston (3) moves.

8. BRAKE DEVICE, to at least one of Claims 1 - 7,
characterised by:
a further spring element (31) being provided for towards the second piston (3) so as to pressurise the power transmitting element (42).

9. BRAKE DEVICE, to at least one of Claims 1 to 8,
characterised by:
the power transmitting element (42) having at or in the outer shell of its angular portion (40) two bearing points (47 and 47a) and each of these bearing points having a lever (25 or 25a) in active connection with a portion (23) of the brake rod assembly.

10. BRAKE DEVICE,
to at least one of Claims 1 to 9,
characterised by:
there being, between the spring magazine piston (28) and the power transmitting element (42), the stop (38) of the tubular body (42) of the power transmitting element, arranged in connection with the pressure piece (32) and the stop (48) located at the projection (36) of the spring magazine piston (28) so as to form a towing assembly.

11. BRAKE DEVICE, to at least one of Claims 1 to 10,
characterised by:
the towing assembly comprising a stop arranged at the projection (36) of the spring magazine piston (28) and inter-acting with a further stop at or in the second piston (3) so as to procure that when the piston (28) moves towards its associated pressuriser chamber (29), the second piston (3) carries along the power transmitting element (42) in the same direction as the said spring magazine piston (28).

12. BRAKE DEVICE, to at least one of Claims 1 to 11,
characterised by:
the towing assembly being a traction element connecting the spring magazine piston (28) with the second piston (3).

## Revendications

1. Système de frein, en particulier pour véhicules sur rails, présentant les caractéristiques ci-après:
a) un cylindre (50) avec un piston (28) faisant fonction de piston à ressort accumulé pouvant être appliqué, par un fluide sous pression provenant d'un compartiment à fluide sous pression (29), contre la force d'un ressort accumulateur (30) est prévu;
b) avec l'une de ses extrémités, le ressort accumulateur (30) s'appuie à un support (26, 41) faisant corps avec le carter et s'applique, avec son autre extrémité, au côté du piston (28) opposé au compartiment à fluide sous pression (29);
c) un élément de transmission de force (42) concourant avec une timonerie de frein (51, 25) et le piston (28) ou avec un élément lié au piston (28) est prévu;
d) l'élément de transmission de force (42) présente au moins une portée (47) pour un levier (25) de la timonerie de frein (51, 25) dont l'axe longitudinal est transversal par rapport à l'axe longitudinal du piston (28);
caractérisé en ce que:
e) l'élément de transmission de force (42) présente au moins une saillie (43) disposée transversalement par rapport à l'axe longitudinal du piston (28) et située sur le côté du support (26, 41) opposé au ressort accumulateur (30);
f) la saillie (43) présente une partie angulaire (40) essentiellement parallèle par rapport à l'axe longitudinal du piston (28) et s'étendant en direction du piston (28);
g) la partie angulaire (40) est essentiellement disposée parallèlement par rapport à l'axe longitudinal du ressort accumulateur (30) hors du ressort accumulateur (30);
h) la portée (47) pour le levier (25) de la timonerie de frein (51, 25) est disposée sur la partie angulaire (40) dans la zone du ressort accumulateur (30).

2. Système de frein selon revendication 1 caractérisé en ce que la saillie (43) de l'élément de transmission de force (42) est conçue en tant que corps en forme de plaque.

3. Système de frein selon revendication 1 caractérisé en ce que la saillie (43) de l'élément de transmission de force (42) est conçue en tant que pièce annulaire.

4. Système de frein selon revendication 1 caractérisé en ce que la partie angulaire (40) de la saillie (43) de l'élément de transmission de force (42) est conçue en tant que corps tubulaire.

5. Système de frein selon revendication 1 caractérisé en ce que la partie de l'élément de transmission de force (42) concourant directement avec le piston (28) ou avec une partie (36, 48) du piston (28) est conçue comme corps tubulaire s'étendant dans l'espace limité par le ressort accumulateur (30).

6. Système de frein selon revendications 1 et 5 caractérisé en ce que le corps tubulaire (42) présente une butée (38) à son extrémité libre orientée vers le piston (28), la butée (38) concourant directement ou par l'intermédiaire d'un élément de pression (32) avec une butée (48) disposée à un prolongement (36) du piston (28) en direction de l'axe longitudinal du piston (28) et s'étendant dans le corps tubulaire (42), de sorte que dans le cas d'un mouvement du piston (28) provoqué par le ressort accumulateur (30), l'élément de transmission de force (42) soit entraîné dans la même direction.

7. Système de frein selon au moins une des revendications précédentes caractérisé en ce que:
a) un piston supplémentaire (3) servant de piston de frein de service disposé en face du piston (28) servant de piston à ressort accumulé est prévu;
b) le piston supplémentaire (3) est déplaçable en direction du piston (28) subissant la force du ressort accumulé (30), dans un compartiment à fluide sous pression supplémentaire (2);
c) le piston (28) servant de piston à ressort accumulé et le piston supplémentaire (2) servant de piston de frein de service sont disposés de telle façon l'un par rapport à l'autre que le ressort accumulé (30), le support (26, 41) faisant corps avec le carter et l'élément de transmission de force soient disposés entre les faces orientées l'une vers l'autre du piston (28) servant de piston à ressort accumulé et du piston supplémentaire (2);
d) le piston supplémentaire (3) présente un prolongement tubulaire (45) s'étendant en direction du piston (28) servant de piston à ressort accumulé;
e) le prolongement tubulaire (45) du piston supplémentaire (3) et le prolongement (36, 48) du piston (28) servant de piston à ressort accumulé sont disposés et dimensionnés de telle façon l'un par rapport à l'autre que le prolongement (36, 48) du piston (28) servant de piston à ressort accumulé s'étende dans le prolongement tubulaire (45) du piston supplémentaire (3);
f) le corps tubulaire (42) de l'élément de transmission de force, le prolongement (45) du piston supplémentaire (3) et le prolongement (36, 48) du piston (28) servant de piston à ressort accumulé sont disposés coaxialement l'un par rapport à l'autre, le corps tubulaire (42) entourant les deux prolongements (45) et (36, 48) sur une partie de leur portion axiale;
g) la portion axiale du prolongement (45) du piston supplémentaire (3) est dimensionnée et disposée avec son côté frontal libre de telle façon par rapport à la butée (38) du corps tubulaire (42) qu'en cas d'un mouvement du piston supplémentaire (2) en direction du piston (28) servant de piston à ressort accumulé, il s'applique avec son côté frontal libre à la butée (38) du corps tubulaire (42) ou à une pièce (32) en relation avec la butée (38) du corps tubulaire (42) et entraîne l'élément de transmission de force dans la direction du mouvement du piston supplémentaire (3).

8. Système de frein selon au moins une des revendications qui précèdent caractérisé en ce qu'un élément de ressort supplémentaire (31) appliquant la force à l'élément de transmission de pression (42) en direction du piston supplémentaire (3) est prévu.

9. Système de frein selon au moins une des revendications qui précèdent caractérisé en ce que l'élément de transmission de force (42) présente deux portées (47 et 47a) dans ou à la surface latérale extérieure de sa pièce angulaire (40), chaque portée (47 ou 47a) étant prévue pour un levier (25 et 25a) concourant avec une pièce (23) de la timonerie de frein.

10. Système de frein selon au moins une des revendications qui précèdent caractérisé en ce que la butée (38) en relation avec l'élément de pression (32), du corps tubulaire (42) de l'élément de transmission de force et la butée (48) disposée au prolongement (36) du piston (28) servant de piston à ressort accumulé sont situées entre le piston (28) servant de piston à ressort accumulé et l'élément de transmission de force (42), et sont conçues comme jonction d'entraînement.

11. Système de frein selon au moins une des revendications qui précèdent caractérisé en ce qu'une butée prévue au prolongement (36) du piston (28) servant de piston à ressort accumulé sert de jonction d'entraînement, cette butée concourant avec une butée prévue au ou dans le piston supplémentaire (3) de telle façon qu'en cas de mouvement du piston (28) servant de piston à ressort accumulé en direction du comportement à fluide sous pression (29) orienté en direction de ce piston (28), le piston supplémentaire (3) est entraîné par le piston (28) servant de piston à ressort accumulé, l'élément de transmission de force (42) étant entraîné au moyen du piston supplémentaire (3) dans la même direction que le piston (28) servant de piston à ressort accumulé et le piston supplémentaire (3).

12. Système de frein selon au moins une des revendications qui précèdent caractérisé en ce qu'un élément de traction reliant le deuxième piston (28) servant de piston à ressort accumulé et le piston supplémentaire (3) est prévu en tant que jonction d'entraînement.
